# EUROPÄISCHE PATENTSCHRIFT

(11) **EP 1 076 784 B1**
(45) Veröffentlichungstag und Bekanntmachung des Hinweises auf die Patenterteilung: **22.10.2003**
(21) Anmeldenummer: 99932627.5
(22) Anmeldetag: 05.05.1999
(51) Int. Cl.: F16G 13/16

(54) **ENERGIEFÜHRUNGSKETTE**
ENERGY GUIDING CHAIN
CHAINE DE GUIDAGE D'ELEMENTS DE TRANSPORT D'ENERGIE

(30) Priorität: 05.05.1998 DE 19819845; 28.08.1998 DE 19839270
(43) Veröffentlichungstag der Anmeldung: 21.02.2001
(60) Teilanmeldung: 02018866.0
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Lippert, Stachow, Schmidt & Partner
(86) Internationale Anmeldenummer: DE9901351
(87) Internationale Veröffentlichungsnummer: WO99057457

(56) Entgegenhaltungen:
- DE-U- 29 821 259
- GB-A- 1 444 307
- PATENT ABSTRACTS OF JAPAN vol. 015, no. 493 (M-1191), 13. Dezember 1991 (1991-12-13) & JP 03 213748 A (TSUBAKIMOTO CHAIN CO;OTHERS: 01), 19. September 1991 (1991-09-19)

## Beschreibung

Die Erfindung betrifft eine Energieführungskette zur Führung von Kabeln, Schläuchen oder dergleichen mit einer Anzahl gelenkig miteinander verbundener Kettenglieder, die durch zueinander parallele Laschen und diese verbindende Querstege gebildet werden, wobei die Energieführungskette so verfahrbar ist, dass diese ein Obertrum, ein Untertrum und einen diese verbindenden Umlenkbereich bildet, wobei das Obertrum auf dem Untertrum aufliegt, und wobei zumindest an einigen Kettengliedern des Obertrums und/oder des Untertrums Gleitrollen vorgesehen sind, die derart angeordnet sind, dass sie auf an den Kettengliedern der gegenüberliegenden Trums vorgesehenen Laufflächen bei einer Bewegung der Energieführungskette abrollbar sind.

Derartige Energieführungsketten weisen bei bestimmten Anwendungszwecken eine beträchtliche Länge auf, die im Bereich von 100 Meter oder darüber liegen kann. Für die Verfahrung der Energieführungskette sind damit entsprechend hohe Antriebsleistungen des Verfahrantriebs notwendig. Dies insbesondere, wenn das Obertrum der Energieführungskette auf dem Untertrum aufliegend verfahren wird, da hierbei eine entsprechende Gleitreibung zu überwinden ist, die bei sehr langen Energieführungsketten beträchtliche Werte annimmt. Aufgrund der Reibung zwischen Obertrum und Untertrum unterliegen die jeweiligen Gleitflächen der Kettenglieder einem erhöhten Verschleiß.

Da beträchtliche Zugkräfte für eine Verfahrung der Energieführungskette notwendig sind, tritt des weiteren eine Längenänderung der Energieführungskette ein, die durchaus bis zu ca.8% bezogen auf die Länge der nicht beanspruchten Kette betragen kann. Diese Längenänderung tritt aufgrund des stets vorhandenen Spiels zwischen den Kettengliedern als auch aufgrund einer stets gegebenen Elastizität der Kettenglieder auf. Diese Verlängerung der Energieführungskette bewirkt eine entsprechende Beanspruchung der von der Energieführungskette geführten Schläuche oder dergleichen.

Es ist bekannt, bei besonders langen Energieführungsketten besondere Stützkonstruktionen vorzusehen, welche das Obertrum unterstützen, so dass das Obertrum auf dieser Stützkonstruktion aufliegend verfahren werden kann. Um die Verfahrbarkeit der Energieführungskette zu erleichtern, sind die Kettenglieder teilweise mit Gleitrollen versehen, die auf der Stützkonstruktion abrollbar sind. Die Anordnung derartiger Stützkonstruktionen ist jedoch sehr aufwendig, des weiteren kommt bei einer Verfahrung der Energieführungskette, bei welcher das Obertrum oberhalb des Untertrums angeordnet ist, die Stützkonstruktion nicht mehr zum Einsatz. Hierzu wurde vorgeschlagen, die Stützkonstruktion so auszubilden, dass die Stützträger seitlich verschwenkt werden können, um diese aus dem Verfahrbereich der Energieführungskette zu entfernen. Hierzu ist jedoch ein entsprechender Verschwenkmechanismus notwendig, welcher einer entsprechenden Wartung bedarf und des weiteren die Verfahrensgeschwindigkeit der Energieführungskette beschränkt. Insgesamt gesehen gibt es eine Vielzahl von Anwendungsbereichen von Energieführungsketten bedi denen, abgesehen von dem technischen Aufwand, Stützkonstruktionen nicht zweckmäßig sind.

Aus der GB 1 444 307A ist eine Energieführungskette bekannt, bei welcher einzelnen Kettengliedern eine Stützfläche zugeteilt ist, die so orientiert ist, daß sie zuammen mit den anderen Stützflächen eine Ebene bildet. Die Stützflächen sind hierbei an der inneren Schlaufenseite vorgesehen. Bei vorausbestimmten Kettengliedern sind Stützräder vorgesehen, die mit ihren Umfangsflächen über die nebenliegenden Stützfläche emporragen, wobei sie durch eine Ausnehmung der Stützfläche hindurchgeführt sind. Hierdurch wird eine Energieführungskette geschaffen, bei welcher die Stützkräfte über die Kettenglieder in günstiger Wiese abgeleitet werden können, so daß die Kettengleider leichter gebaut und höhere Stützkräfte übertragen werden können.

Aufgabe der vorliegenden Erfindung ist es, eine Energieführungskette zu schaffen, bei welcher das Obertrum auf dem Untertrum aufliegend mit möglichst geringem Kraftaufwand und geringem Verschleiß verfahrbar ist und die möglichst einfach konstruiert ist, und bei der auch bei langen Energieführungsketten eine konstruktiv einfache Führung der Energieführungskette gegeben ist.

Erfindungsgemäß wird die Aufgabe dadurch gelöst, daß die Gleitrollen ein Führungsprofil aufweisen, das durch mehrere umlaufende, im Abstand voneinander in der Lauffläche der Gleitrollen angeordnete Führungsrillen gebildet wird. Durch die erfindungsgemäße Ausgestaltung der Gleitrollen können die Laufeigenschaften weiter verbessert und Geräuschemissionen noch stärker verringert werden sowie die Reibung zwischen Untertrum und Obertrum noch weiter reduziert werden. Gleichzeitig wird eine sichere Führung für die Energieführungskette bereitgestellt.

Wenn die Gleitrollen zweier übereinanderlaufender, jeweils mit Rollen bestückter Kettenglieder aufeinandertreffen, versetzen diese sich aufgrund der Geometrie der Führungsrillen in etwa um eine Rillenbreite, so dass die Profile der aufeinandertreffenden Gleitrollen ineinanderkämmen. Die Elastizität der Energieführungskette erlaubt ohne weiteres einen geringfügig versetzten Lauf von Obertrum und Untertrum gegeneinander. Dieser Versatz entspricht etwa der Breite einer Führungsrille. So wird in vorteilhafter Art und Weise die Konvergenz der beiden übereinbanderliegenden Trumme beim Aufeinandertreffen von jeweils zwei Gleitrollen verhindert.

Besonders vorteilhaft ist es, wenn die Tiefe der Führungsrillen wenigstens dem Überstand der Gleitrolle über die Lauffläche der betreffenden Kettenlasche entspricht. Hierdurch wird vollständig verhindert, dass die Gleitrollen nicht mehr übereinander auf- und absteigen müssen, wodurch zudem beträchtlich an ansonsten aufzuwendender Zugkraft auf das Obertrum gespart wird. Sich aufeinanderzubewegende Gleitrollen können sich auf diese Art und Weise einfach und vollständig durchdringen.

Zweckmäßigerweise besitzen die Führungsrillen ein etwa trapezförmiges Querschnittsprofil, wodurch die richtige Ausrichtung der Gleitrollen zueinander gewährleistet wird.

Als Gleitrollen im Sinne der Erfindung sollen hierbei Einrichtungen verstanden werden, die bei Anlage an den Laufflächen und einer Relativbewegung zu diesem eine rotatorische Bewegung ausführen. Als Laufflächen können z.B. nach seitlich nach außen vorkragende Bereiche an den Kettenlaschen vorgesehen sein.

Durch diese Maßnahmen ist das Obertrum mittels der Gleitrollen unmittelbar auf dem Untertrum verfahrbar, wodurch aufgrund der erfindungsgemäß vorgesehenen Gleitrollen die Reibung zwischen Obertrum und Untertrum drastisch vermindert ist. So liegt der Reibungswert bei der erfindungsgemäßen Energieführungskette um ca. den Faktor 6 oder mehr unterhalb desjenigen einer herkömmlichen Energieführungskette entsprechender Ausführung, so daß bei gleichem Antrieb die Kettenlänge um den Faktor 6 oder darüber hinaus länger sein kann.

Des weiteren tritt aufgrund der vorgesehenen Gleitrollen auch eine deutlich verringerte Verlängerung gegenüber herkömmlichen Energieführungsketten auf, die mit der gleichen Geschwindigkeit verfahren werden. Auch ist der Verschleiß an den Kontaktflächen zwischen Obertrum und Untertrum deutlich vermindert.

Da die Laufflächen für die Gleitrollen des gegenüberliegenden Trums unmittelbar an den Kettengliedern angeordnet sind, ist eine besonders gewichtssparende Ausführung der Energieführungskette möglich, so daß die Länge der Energieführungskette sowie deren Verfahrgeschwindigkeit entsprechend hohe Werte annehmen können.

Die Gleitrollen können unmittelbar an den Kettenlaschen mittels entsprechender Lager befestigt sein, wodurch die Halterung der Gleitrollen entsprechend stabil ausführbar ist. Separate Verbindungsstücke sind so nicht erforderlich.

Vorzugsweise sind die Gleitrollen in an den Kettenlaschen angeordneten Ausnehmungen angeordnet, wobei die Gleitrollen zumindest geringfügig über die Kettenlaschen in Richtung auf das gegenüberliegende Trum hervorstehen. Die Drehachse der Gleitrollen befindet sich dabei innerhalb des Querschnittes der Kettenlaschen.

Die Laufflächen für die Gleitrollen können unmittelbar durch die dem gegenüberliegenden Trum zugewandten Schmalseiten der Kettenlaschen gebildet werden. Hierbei können die Kettenlaschen derart ausgebildet sein, daß sich bei gestreckter Energieführungskette eine durchgehende Lauffläche ergibt, so daß insbesondere in den Gelenkbereichen der Kettenlaschen keine oder nur minimale Niveaunterschiede der Lauffläche vorliegen.

Die Ausnehmungen zur Aufnahme der Gleitrollen in den Kettenlaschen können dabei in seitlicher Richtung der Kettenlaschen, d.h. quer zur Längsrichtung der Energieführungskette, geschlossen ausgeführt sein. Durch die derart gebildeten Taschen, die nur einseitig geöffnet sind, kann eine Energieführungskette mit vollständig abgeschlossenem Innenraum ausgebildet werden.

Um eine geringe Flächenpressung der Laufflächen zu gewährleisten, ist die Breite der Gleitrollen möglichst groß zu wählen. Gegebenenfalls können hierzu die Kettenlaschen im Bereich der Gleitrollen mit Dickstellenbereichen entsprechender Stärke ausgeführt sein, wobei die Wandungsstärke der Kettenlaschen in Richtung auf die Gelenkbereiche oder in Richtung auf die Mittellängsachse der Kettenlaschen hin abnehmen kann.

An den Kettenlaschen können jeder Schmalseite zugeordnet jeweils eine oder auch zwei oder mehrere Gleitrollen vorgesehen sein, die bezüglich der Längsrichtung der Energieführungskette voneinander beabstandet sind, wodurch die Beanspruchung der Gleitrollen und der Lager jeweils auf mehrere Gleitrollen verteilt werden kann.

Die Laschen können durch einen, ggf. mittig an der Kettenlasche bzw. mittig zwischen den zwei oder mehreren Rollen angeordneten Quersteg verbunden sein. Vorzugsweise sind die Schmalseiten gegenüberliegender Laschen mit zwei Querstegen verbunden, die insbesondere jeweils unmittelbar benachbart den Gelenk- bzw. Endbereichen an den Seitenlaschen angeordnet sein können, wodurch die Stabilität der Kettenglieder besonders bei langen Gliedern erhöht wird. Die Laschen können so insgesamt durch vier, ggf. aber auch nur durch drei oder zwei Querstege verbunden sein. Besonders vorteilhaft weisen die Querstege seitliche Verbreiterungen auf, die die Innenseite der benachbarten Lasche teilweise überdecken. Ist vorgesehen an den Querstegen Deckel- bzw. Bodenelemente anzuordnen, so daß ein allseitig geschlossener Kabelkanal resultiert, so weist der Abstand benachbarter Querstege an jeweils einer Schmalseite der Laschen sowie die Laschenlänge vorteilhafterweise eine doppelt so große Teilung auf, wie die nicht mit Rollen versehenen Kettenglieder. Die mit Rollen versehenen Glieder können so mit der doppelten Anzahl von üblichen Deckel- und Bodenelementen der bisher eingesetzten Glieder bestückt werden, um einen geschlossenen Kanal zu bilden, ohne daß Sonderteile notwendig sind.

Nach einer weiteren Ausführungsform kann an jeder Kettenlasche jeweils zumindest eine Gleitrolle vorgesehen sein, die im mittleren Bereich der Kettenlasche angeordnet ist, wobei in Längsrichtung der Energieführungskette jeweils vor oder hinter der Gleitrolle, vorzugsweise vor und hinter derselben, Querstege angeordnet sind. Eine Ausführung mit mehreren Querstegen ist insbesondere dann vorteilhaft, wenn die Kettenlaschen aufgrund der an diesen angeordneten Gleitrollen eine größere Länge aufweisen.

Um die Laufeigenschaft der Energieführungskette zu verbessern können die Laufflächen Auflaufschrägen aufweisen, die zu den Gleitrollen hin jeweils ansteigen. Hierdurch kann die von den Kettenlaschen vorstehende Höhe der Gleitrollen bei einer gegebenen Anordnung der Drehachse verringert werden, was sich auf die Laufruhe der Energieführungskette vorteilhaft auswirkt.

Zur Befestigung der Gleitrollen in den Ausnehmungen der Kettenlaschen können Flansche vorgesehen sein, die einen Lagerbereich für die Gleitrollen aufweisen, wobei die Flansche bezüglich der Drehachse der Gleitrollen Bereiche größerer radialer Ausdehnung aufweisen können, die mit Mitteln zur Befestigung der Flansche an.den Kettenlaschen versehen sind. Die Gleitrollen können dabei einseitig oder beidseitig an den Flanschen gelagert sein, die Drehachse kann auch an einseitig am Flansch und an dem gegenüberliegenden Bereich der Kettenlasche gelagert sein.

Sind die Kettenlaschen mit Ausnehmungen zur Aufnahme der Gleitrollen versehen, so können Mittel vorgesehen sein, mittels derer die Ausnehmungen in Richtung auf das gegenüberliegende Trum überbrückbar sind. Dies kann z.B. durch entsprechende Abdeckkappen erfolgen. Hierdurch kann ein Einlaufen der Gleitrollen eines Trums in Ausnehmungen der Kettenglieder des gegenüberliegenden Trums verhindert werden, wenn in diesen Ausnehmungen keine Gleitrollen angeordnet sind.

Insbesondere können zwischen den mit Gleitrollen versehenen Kettengliedern auch übliche Kettenglieder vorgesehen sein. Die Energieführungskette kann so im wesentlichen aus bisher bekannten Kettengliedern aufgebaut werden, zwischen denen z. B. im Abstand von mehreren Kettengliedern zusätzlich mit Rollen versehene Kettenglieder angeordnet werden.

Die Kettenlaschen können alternativ oder zusätzlich auch so ausgebildet sein, daß diese an einer der parallel zur Längsrichtung der Kette verlaufenden Schmalseite mit Ausnehmungen zur Aufnahme von Gleitrollen versehen sind, wobei die gegenüberliegende Schmalseite der Kettenlasche keine Ausnehmungen aufweist, und wobei die Kettenlaschen so ausgebildet sind, daß sie wahlweise mit einer der Schmalseiten dem gegenüberliegenden Trum zugewandt montiert werden können. Die gleiche Kettenlasche kann so wahlweise bei Montage mit oder ohne Gleitrolle verwendet werden. Hierzu ist die Kettenlasche lediglich um 180° um ihre Längsachse oder um die Achse zu drehen, welche in der Mittelebene der Kettenlaschen sich senkrecht zu deren Längsrichtung erstreckt.

Die mit Laufrollen versehenen Glieder besitzen eine größere Länge, d. h. eine größere Teilung als die herkömmlichen Kettenglieder. Das Überschreiten eines bestimmten Teilungsmaßes ist eigentlich nicht wünschenswert, da hierdurch ein unrunder Lauf der Kette im Umlenkradius erzeugt wird, insbesondere wenn Glieder mit zu stark unterschiedlicher Länge alternierend aufeinanderfolgen. Nach einer Ausführungsform der Erfindung ist deshalb vorgesehen, daß die Gleitrollen seitlich nach außen vorstehend an den Kettenlaschen angeordnet sind und daß als Laufflächen seitlich nach außen vorkragende Verbreiterungen der Kettenlaschen vorgesehen sind. Hierdurch kann bei Kettengliedern mit Gleitrollen die Teilung der Kettenglieder ohne Gleitrollen beibehalten werden.

Zweckmäßigerweise sind bei einer solchen Ausführung der Energieführungskette wenigstens alle Kettenlaschen eines Strangs, sowohl Außenlaschen als auch Innenlaschen, mit einer eine Lauffläche bildenden Verbreiterung versehen, so daß über die Länge der Energieführungskette wenigstens eine im wesentlichen geschlossene Lauffläche entsteht.

Die Gleitrollen können jeweils eine fensterartige Ausnehmung in den Laufflächen bildenden Verbreiterungen durchdringen.

Die Verteilung der Gleitrollen auf die Kettenglieder ist auf unterschiedliche Art und weise möglich. Es ist nicht in allen Fällen nowendig, jedes der Kettenglieder mit Gleitrollen zu versehen, so daß die Gleitrollen auch im Abstand von mehr als einem Kettenglied an der Energieführungskette angeordnet sein können. Es kann dabei ein regelmäßiger Abstand zwischen den Gleitrollen vorgesehen sein, so daß z.B. nur jedes vierte, nur jedes fünfte oder dergleichen Kettenglied mit gegenüberliegenden Gleitrollen versehen ist.

Die Gleitrollen können jedoch auch ungleichmäßig über die Länge der Energieführungskette verteilt sein. So können größere Identitätsperioden der Gleitrollenverteilung vorgesehen sein, wobei der Abstand der Gleitrollen zueinander z.B. alternieren kann, so daß ausgehend von einem Kettenglied in Kettenlängsrichtung Gleitrollen nach drei, dann nach fünf, dann nach drei usw. Kettengliedern angeordnet sind. Die Verteilung der Gleitrollen über die Kettenglieder kann dabei auch statistisch erfolgen.

Des weiteren ist es nicht notwendig, beide Kettenlaschen desselben Kettengliedes mit Gleitrollen zu versehen, so daß die Verteilung der Gleitrollen auf die verschiedenen Stränge von Kettenlaschen nicht symmetrisch sein muß.

Eine ungleichmäßige bzw. unsymmetrische Verteilung der Gleitrollen hat den Vorteil, daß zu bestimmten Zeitpunkten der Verfahrung der Energieführungskette nicht sämtliche Gleitrollen gleichzeitig miteinander in Berührung kommen, sondern vielmehr jeweils nur einige derselben, wobei die zeitlichen Abstände zwischen den Berührungen der Gleitrollen variieren können. Hierdurch werden die geringen Stoßbewegungen beim Aufeinandertreffen der Gleitrollen ungleichmäßig über die Energieführungskette verteilt, so daß bei einer schnellen Verfahrung derselben sich über die esamte Energieführugnskette erstreckende ruckartige Bewegungen vermieden werden. Die Laufruhe der Energieführungskette kann hierdurch verbessert werden.

Je nach Einsatzbedingung der Energieführungskette können die Kettenlaschen mit Gleitrollen versehen sein, welche bezüglich der Längsachse der Kettenlaschen auf einer Seite, auf der gegenüberliegenden Seite oder auf beiden Seiten der Kettenlaschen hervorstehen. Diese Kettenlaschen können hiermit wahlweise im Bereich des Obertrums oder des Untertrums montiert werden oder, wenn die Energieführungskette um den Abschlußpunkt beidseitig verfahrbar ist, auf beiden Seiten der Kettenlaschen.

Die Anordnung von Gleitrollen ist insbesondere auch bei Energieführungsketten möglich, die mehr als zwei parallele Stränge von Kettenlaschen aufweisen, wobei Gleitrollen an zumindest zwei Strängen vorzusehen sind. Die Gleitrollen können beispielsweise ausschließlich an den außen liegenden Strängen angeordnet sein, sie können alternativ oder zusätzlich auch an einen oder mehreren der innenliegenden Stränge der Kettenlaschen vorgesehen sein.

Besonders vorteilhaft ist es, wenn zumindest an einem sich an den beweglichen Mitnehmer der Energieführungskette anschließenden Bereich der Kette abschnittsweise Kettenglieder untereinander und das zum Mitnehmer nächstliegende dieser Kettenglieder mit dem Mitnehmer zugstabil durch mindestens ein in Längsrichtung der Kette im wesentlichen nicht dehnbares und in Abwinklungsrichtung der Kette biegsames Element verbunden sind. Eine derartige Einrichtung ist in der deutschen Patentanmeldung DE 198 07 083 beschrieben, deren Offenbarungsgehalt hiermit voll inhaltlich aufgenommen sei.

Durch die Anordnung des nicht dehnbaren Elements an der Energieführungskette ist diese in Kombination mit der Anordnung der Gleitrollen mit geringem Kraftaufwand und ohne Längung der Energieführungskette unter Zugbelastung mit sehr großen Längen verfahrbar. Insgesamt können so Energieführungsketten besonders großer Längen beherrscht werden, wodurch sich neue Anwendungsgebiete für Energieführungsketten ergeben.

Vorteilhafterweise umfassen die Abschnitte, in denen die durch das oder die nicht dehnbaren Elemente verbundene Kettenglieder angeordnet sind, mehrere Kettenglieder. Die Abschnitte können von gleicher oder unterschiedlicher Länge sein. Bevorzugt werden unterschiedliche Längen verwendet, wobei sich die Abschnitte zum Mitnehmer hin verkleinern, da sich die Zugbeanspruchung der Kette zum Mitnehmer hin erhöht.

Bei dem oder mindestens einem der nicht dehnbaren Elemente kann es sich um eine der in der Kette geführten Leitungen handeln. Bevorzugt ist das oder mindestens eines der Elemente separat zu den Leitungen angeordnet. Das bzw. die separat zu den Leitungen angeordneten Elemente können im Innern der Kette vorgesehen sein und zum Beispiel Stahlseile aufweisen. Es kommt jedoch auch jedes andere diese Eigenschaften aufweisende Element in Betracht.

Die benachbarten der am Ende einzelner Abschnitte angeordneten Kettenglieder sind vorzugsweise unterereinander und das zum Mitnehmer nächstliegende dieser Kettenglieder mit dem Mitnehmer durch jeweils mindestens ein in Längsrichtung der Kette nicht dehnbares und in Abwinklungsrichtung der Kette biegsames Element zugstabil verbunden.

vorzugsweise werden das oder die nicht dehnbaren Elemente auf separat zu den Querstegen angeordneten Leisten, die mit den gegenüberliegenden Laschen der Kettenglieder verbunden sind, zugstabil befestigt.

Die durch die Kette geführten Leitungen sind vorteilhafterweise mittels Klemmböcken an diesen Leisten befestigt, die außerdem Befestigungsteile für die Enden von Stahlseilen oder anderen entsprechenden Elementen aufweisen können.

Die Leisten können an ihren in Querrichtung der Kette liegenden Enden Zapfen aufweisen, die die Funktion der Gelenkzapfen der betreffenden Kettenglieder übernehmen. Das heißt, daß die Zapfen der Leisten formschlüssig durch zwei zueinaner fluchtende Öffnungen in den Überlappungsbereichen unmittelbar benachbarter Kettenglieder greifen und somit die Schwenkachsen dieser Kettenglieder bilden. Diese Ausbildung erlaubt eine um die Schwenkachsen pendelnde Anordnung der auf den Leisten befestigten Leitungen und separaten nicht dehnbaren Elementen.

Die Leisten können an ihren in Querrichtung der Kette liegenden Enden Vorsprünge aufweisen, die in entsprechend ausgebildeten Nuten an den Innenseiten der Kettenglieder zwischen den Gelenkbereichen eingreifen. Die in allen Kettengliedern einer Kettenserie vorgesehenen Nuten können auch zur Befestigung anderer Teile zwischen den Kettenlaschen dienen.

Die erfindungsgemäßen Energieführungsketten können sowohl durch Innen- und Außenlaschen als auch durch gekröpfte Kettenglieder aufgebaut werden. Die Querstege können jeweils lösbar oder einstückig an den Seitenlaschen befestigt sein oder eine Breite einnehmen, so daß ein geschlossener Kanal entsteht. Die Gelenkverbindungen können auf jede Art und Weise ausgeführt sein und z.B. auch als Filmscharniere o.dgl..

Die Erfindung wird im folgenden im einzelnen beschrieben und anhand der Figuren beispielhaft erläutert. Es zeigen:
Figur 1 eine Außenlasche einer Energieführungskette in verschiedenen Ansichten,
Figur 2 eine Innenlasche einer Energieführungskette in verschiedenen Ansichten,
Figur 3 eine zweite Ausführungsform einer Außenlasche,
Figur 4 einen Querschnitt durch eine Kettenlasche auf Höhe einer Gleitrolle,
Figur 5 eine Draufsicht auf einen Ausschnitt einer Energieführungskette,
Figur 6 Seitenansichten auf drei Energieführungsketten mit auf dem Untertrum abgelegtem Obertrum und unterschiedlicher Verteilung von Gleitrollen,
Figuren 7 und 8 vergrößerte Darstellungen einer Energieführungskette nach Figur 6 in unterschiedlichen Verfahrstellungen,
Figur 9 einen Querschnitt einer Energieführungskette mit auf dem Untertrum abgelegtem Obertrum in unterschiedlichen Verfahrstellungen,
Figur 10 eine Seitenansicht einer Energieführungskette mit einem Mitnehmer und Kettenglieder verbindendem nicht dehnbaren Element,
Figur 11 eine Darstellung einer zweiten Ausführungsform der Energieführungskette mit auf dem Untertrum abgelegten Obertrum, bei welcher die Gleitrollen seitlich nach außen vorstehend an den Kettenlaschen angeordnet sind,
Figur 12 die Darstellung aus Fig. 11, teilweise im Schnitt,
Figuren 13 und 14 jeweils Seitenansichten einer Energieführungskette mit auf dem Untertrum abgelegtem Obertrum gemäß dem zweiten Ausführungsbeispiel,
Figur 15 eine Darstellung einer Energieführungskette mit auf dem Untertrum abgelegtem Obertrum gemäß einem Ausführungsbeispiel der Erfindung, bei welchem die Gleitrollen profiliert sind,
Figur 16 die Ansicht aus Figur 15, teilweise im Schnitt, und
Figuren 17 und 18 jeweils eine Seitenansicht der Energieführungskette gemäß dem Ausführungsbeispiel der Erfindung, jeweils in einer anderen Verfahrstellung der Energieführungskette.

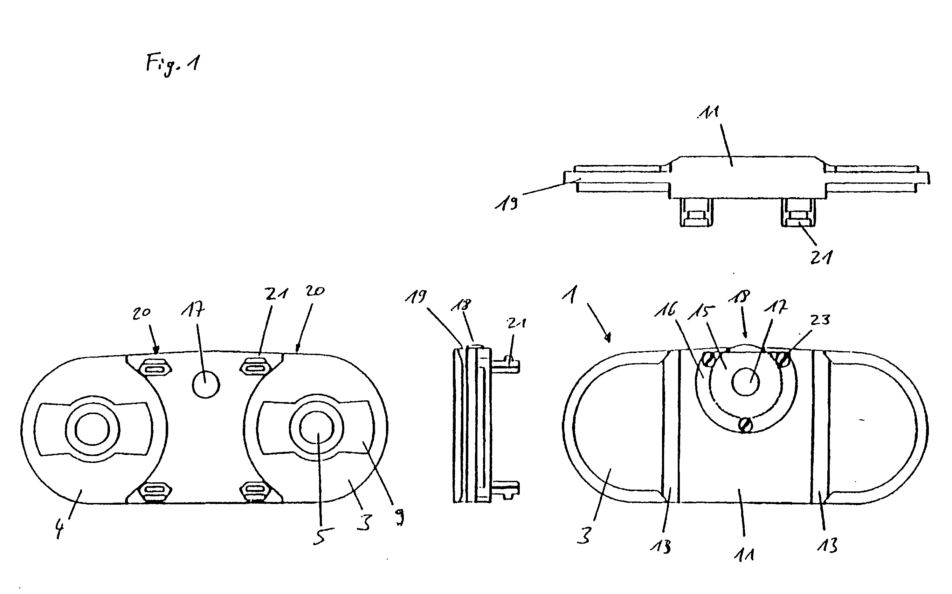

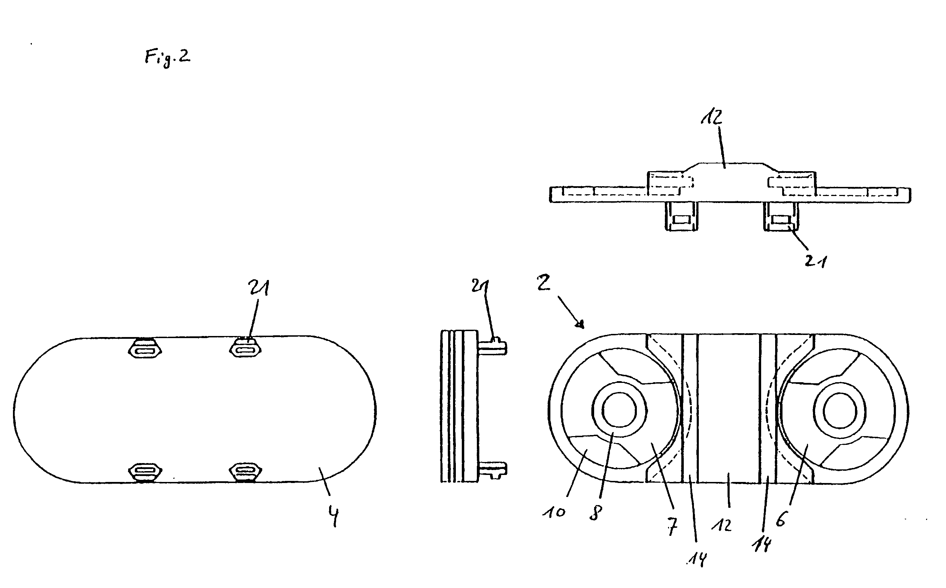

Die in Figur 1 gezeigte Kettenlasche 1 ist als Außenlasche ausgeführt, die mit einer Innenlasche 2 nach Figur 2 zur Bildung eines Stranges gelenkig verbunden wird. Hierzu sind an den Endbereichen 3,4 der Laschen 1 Gelenkzapfen 5 und an den Endbereichen 6,7 der Innenlaschen 2 korrespondierenden Zapfenführungen 8 sowie sowie jeweils korrespondierende Anschlagpaare 9,10 zur Begrenzung der Verschwenkwinkel vorgesehen.

Die Laschen 1,2 sind jeweils symmetrisch zu der senkrecht zur Längsachse der Laschen stehenden Mittelebene.

Die mittleren Bereiche 11,12 der Kettenlaschen 1,2 sind als Dickstellenbereiche ausgeführt und gehen an der dem Ketteninneren abgewandten Seite der Laschen 1,2 über die senkrecht zur Längsache der Laschen verlaufenden Schrägen 13,14 in die Endbereiche 3,4 über.

An dem mittleren Bereich 11 der Außenlasche 1 ist eine Gleitrolle 15 in einer kreissegmentförmigen Ausnehmung 15a mittels eines Flansches 16 drehbar befestige. Die Drehachse 17 der Gleitrolle ist an einem Ende von dem Flansch 16 und an dem gegenüberliegenden Ende von der Kettenlasche in einer Ausnehmung gehaltert.

Die Gleitrolle 15 kann über den vorstehenden Bereich 18 auf einer an den Kettengliedern des gegenüberliegenden Trums angeordneten Lauffläche abrollen, so daß das Obertrum auf dem Untertrum aufliegend verfahrbar ist.

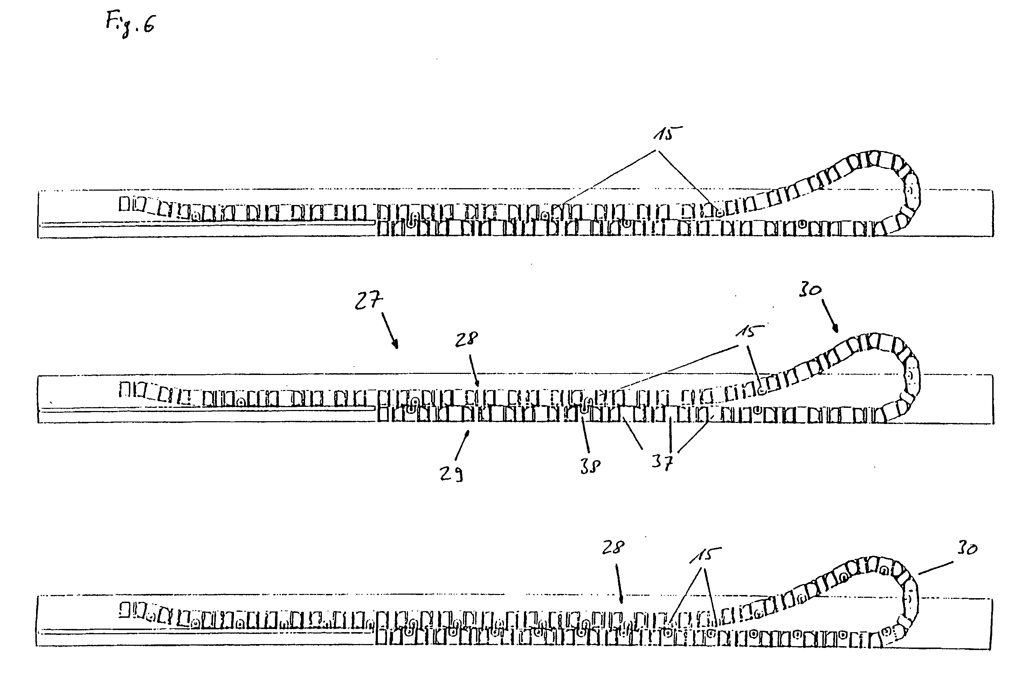

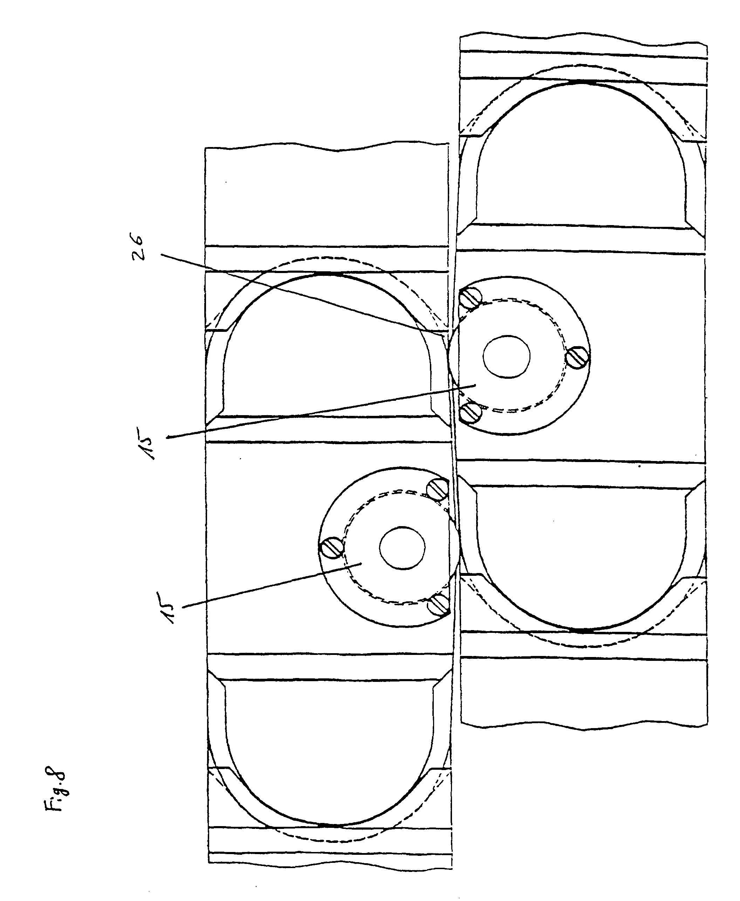

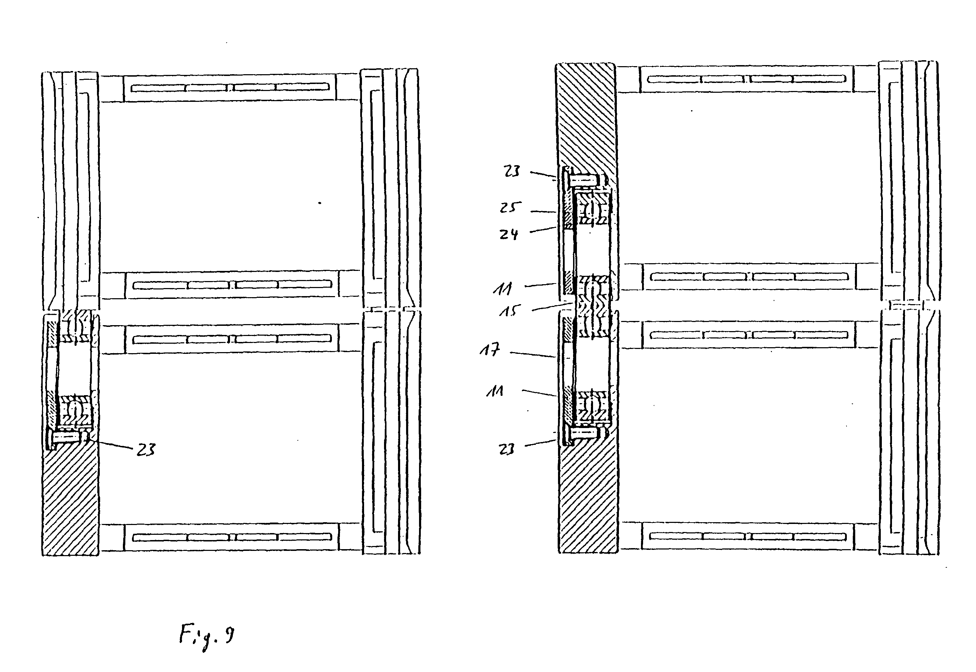

Als Laufflächen für die Gleitrollen des gegenüberliegenden Trums dienen in dem Ausführungsbeispiel die Schmalseiten 19 der Kettenlaschen (siehe Figur 9), die sich im wesentlichen zwischen den durch die Gelenkbereiche definierten Verschwenkachsen benachbarter Kettenglieder erstrecken (Figuren 6-8). Hierdurch ist gewährleistet, daß im gestreckten Zustand der Energieführungskette die Laufflächenbereiche 26 zwischen den benachbarten Kettenlaschen auf Höhe der Gelenkverbindungen keine Vertiefungen entstehen, so daß sich eine über die Kettenlänge durchgehende Lauffläche ohne oder nur mit geringen Niveauunterschieden für die Gleitrollen ergibt.

Die Lauffläche bzw. Seitenfläche 19 weist sich in Längsrichtung der Energieführungskette erstreckende, der Gleitrolle 15 vor- bzw. nachgelagerte Auflaufschrägen 20 auf, die zu den Gleitrollen 15 hin ansteigen und im wesentlichen jeweils auf Höhe der Verschwenkachsen der Laschen beginnen. Die Steigung der Auflaufschrägen 20 ist dabei vergleichsweise gering und kann z.B. ein Höhe von ca. 3 mm über eine Länge von 80 mm überwinden. Über den Scheitelpunkt der Auflaufschräge 20 ragt dabei der Bereich 18 der Gleitrolle 15 nochmals um ca. 2 mm hervor.

Die Innenlaschen sowie die nicht mit Gleitrollen versehenen Schmalseiten der Außenlaschen weisen in den gezeigten Ausführungsbeispielen keine Auflaufschrägen auf.

Der Durchmesser der Gleitrollen 15 entspricht in dem gezeigten Ausführungsbeispiel im wesentlichen der halben Höhe der Kettenlasche 1. Der Auflaufwinkel auf die Geitrollen (Winkel zwischen der Umfangsfläche der Gleitrolle und der Auflaufschräge) ist hierdurch vergleichsweise gering. Es können jedoch auch Gleitrollen mit einem deutlich verringerten Durchmesser verglichen mit der Höhe der Kettenlaschen eingesetzt werden.

Aufgrund der Verbreiterung der mittleren Bereiche 11,12 der Kettenlaschen 1,2 ist hier auch eine Verbreiterung der Lauffläche für die Gleitrollen möglich, wodurch eine geringere Flächenpressung auf die Schmalseiten 19 der Kettenlaschen und damit eine zusätzlich verringerte Materialbeanspruchung resultiert.

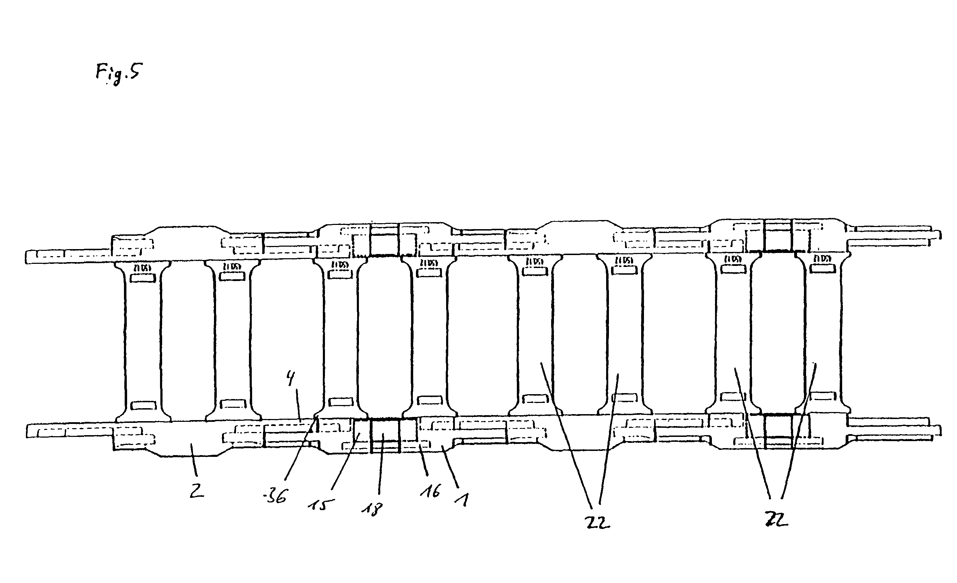

Wie sich des weiteren aus den Figuren 1,2,3 und 5 ergibt, sind auf Höhe der verstärkten mittleren Bereiche 11,12, in deutlichem Abstand voneinander paarweise Zapfen 21 zur Befestigung der Querstege 22 angeordnet, so daß gegenüberliegende Innenund Außenlaschen jeweils über vier Querstege verbunden sind, wodurch die Stabilität der Kettenglieder erhöht wird. An der Außenlasche sind die Zapfen 21 dabei in Längsrichtung der Energieführungskette jeweils vor und hinter der Gleitrolle 15 angeordnet. Auch die Querstege 22 der Innenlaschen sind beabstandet zueinander angeordnet (Fig. 5). Ist die gegenüberliegende Seite der Kettenlasche 1, wie dargestellt, nicht mit einer Gleitrolle versehen, so können auf dieser Seite die Kettenlaschen wahlweise auch durch einen einzigen, auf Höhe der Gleitrolle angeordneten Quersteg verbunden sein.

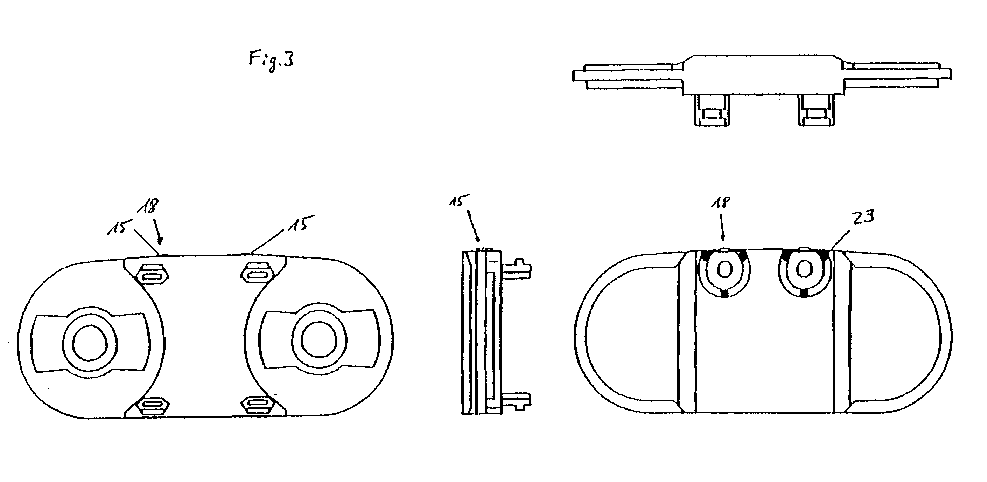

Gemäß dem Ausführungsbeispiel nach Figur 3 können an einer Kettenlasche auch zwei (oder ggf. auch mehr) Gleitrollen hintereinander angeordnet sein. Die Gleitrollen sind auch hier im Dickstellenbereich mittels Flanschen befestigt. Die Querstege 22 sind wie bei den Kettenlaschen nach Fig. 1 und 2 an den Endbereichen der Dickstellenbereiche angeordnet, sie können ggf. auch zwischen den Gleitrollen vorgesehen sein. Der Laufflächenbereich zwischen den Gleitrollen 15 verläuft parallel zu der gegenüberliegenden Schmalseite der Lasche.

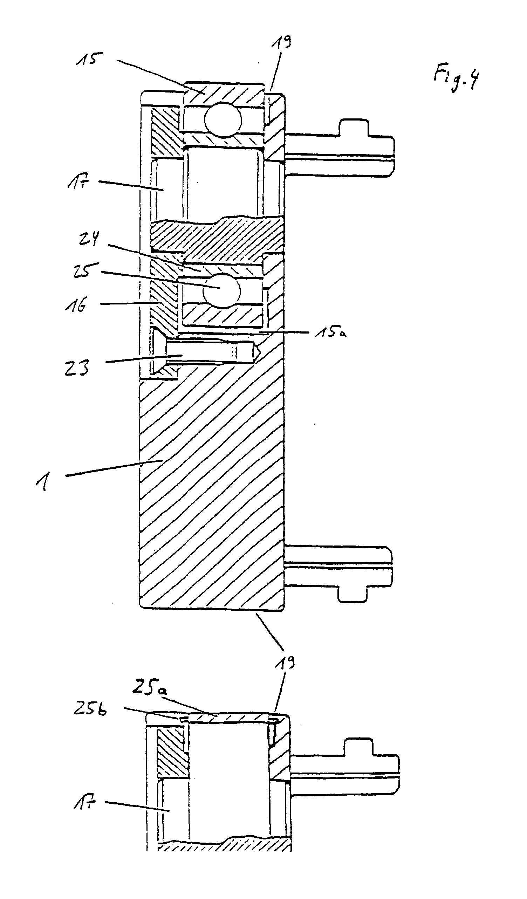

Wie aus den Figuren 4 und 9 hervorgeht, rollen die Gleitrollen 15 auf den Schmalseiten 19 der Kettenlaschen 1 des gegenüberliegenden Trums ab, bis diese mit den Gleitrollen des gegenüberliegenden Trums in Kontakt kommen und diese überrollen.

Des weiteren geht aus den Figuren 4 und 9 hervor, daß die Drehachse 17 der Gleitrolle jeweils an einem Ende von dem Flansch 16 und an dem gegenüberliegnen Ende von der Kettenlasche in einer Ausnehmung 15a gehaltert ist. Die Drehachse trägt eine Lagerschale 24 eines Kugellagers 25. Die Flansche 16 sind mittels drei Schraubbolzen 23 an den Kettenlaschen unverdrehbar festgelegt und vollständig von der Lasche 1 aufgenommen, so daß die Flansche seitlich nicht hervorstehen. Dabei nehmen die Gleitrollen 15 ca. die halbe Breite der Kettenlaschen ein. Die Flansche 11 können dabei auch so ausgeführt sein, daß diese die Gleitrollen 12 im wesentlichen einkapseln.

Durch die Befestigung der Gleitrollen 15 mittels der Flansche 11 unmittelbar an den Kettenlaschen ergibt sich eine besonders stabile Lagerung der Gleitrollen. Die Gleitrollen sind in der Querschnittskontur der Energieführungskette und die Drehachsen innerhalb der Querschnittskontur der Kettenlaschen angeordnet, so daß nach außen vorstehende Bereiche vermieden werden.

Dadurch, daß die Höhe der über die Schmalseiten 14 der Kettenlaschen 1 hervorstehenden Bereiche 13 verglichen mit dem Durchmesser der Gleitrollen 12 eine geringe Höhe aufweisen, ist eine Verfahrung der Energieführungskette mit großer Laufruhe möglich.

Wie in Figur 4, unten, gezeigt, kann bei demontierter Gieitrolle die der jeweiligen Schmalseite 19 des Kettengliedes zugewandte Öffnung mit einer Abdeckkappe 25a verdeckt werden und zu deren Festlegung an der Seitenlasche Rastmittel 25b vorgesehen sein können, wobei gegebenfalls das Befestigungsmittel für die Gleitrolle montiert bleiben kann. Gegebenenfalls kann durch dieselbe oder eine separate Abdeckkappe auch der seitliche Bereich des Seitenteils, der der Aufnahme des Befestigungsmittel der Gleitrolle dient, verdeckt werden. Die Abdeckung kann dabei bündig mit der jeweiligen Begrenzungsfläche der Seitenlasche abschließen.

wie aus Figur 5 hervorgeht sind an Innen- und Außenlaschen jeweils zwei Querstege 22 unmittelbar benachbart zu den Endbereichen 3,4 angeordnet. Die Querstege 22 an den Außenlaschen 1 übergreifen mit ihren endseitigen Verbreiterungen 36 die Endbereiche 4 der Innenlaschen innenseitig mit nur geringem Spiel, so daß durch diese Überdeckung die Stabilität der Kette erhöht wird.

Um das Obertrum auf dem Untertrum mittels der Gleitrollen 15 mit geringem Kraftaufwand verfahren zu können, ist es, wie aus Figur 6 hervorgeht, nicht erforderlich, an jeder Kettenlasche der Energieführungskette 27 Gleitrollen vorzusehen, diese können vielmehr auch im Abstand voneinander, z.B. nach jedem dritten oder vierten Kettenglied) an den Kettenlaschen angeordnet sein. Sind die Gleitrollen in geringem Abstand angeordnet, z.B. an jedem Kettenglied, so kommen auch beim Übergang vom Umlenkbereich 30 zum Obertrum 28 die Gleitrollen zuerst mit dem Untertrum 29 in Kontakt und eine Gleitreibung wird vermieden.

In derselben Energieführungskette 27 können Kettenglieder mit Rollen 38 vorgesehen sein, die eine größere Länge aufweisen, als Kettenglieder ohne Rollen 37 (Fig. 6).

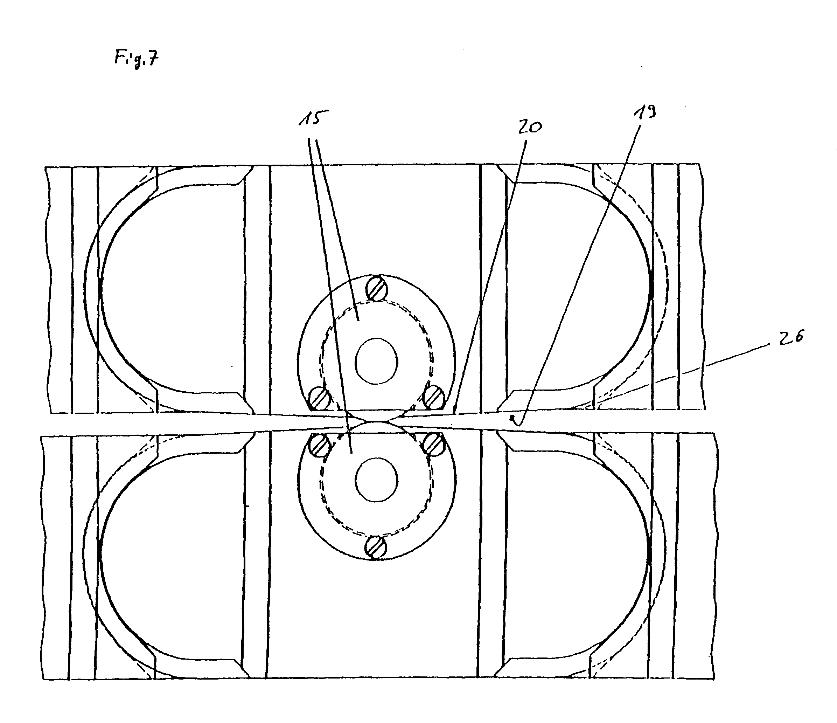

Wie aus den Figuren 6-8 hervorgeht, ist aufgrund der geringfügig vorstehenden Gleitrollen bei ausreichender Stabilität der Energieführungskette das abgelegte Obertrum freitragend angeordnet und stützt sich nur mittels der Gleitrollen auf dem Untertrum ab, so daß bei einer Relativbewegung von Ober- und Untertrum besonders geringe Reibungswerte resultieren. Aufgrund der Auflaufschrägen 20 (Fig. 7) erweitert sich der Zwischenraum zwischen der Kettensträngen.

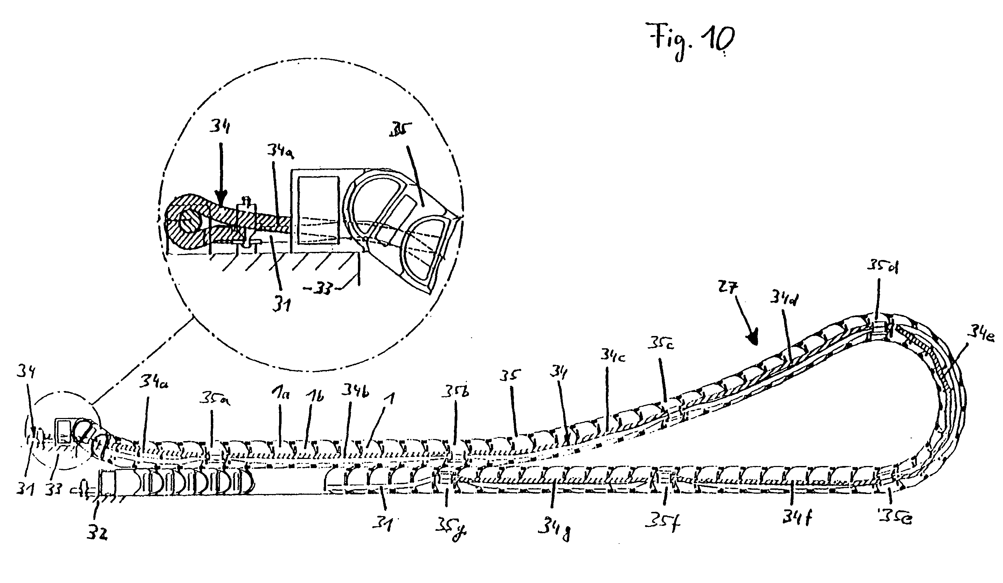

Als weitere Einrichtung, die im Zusammenhang mit den Gleitrollen von besonderer Bedeutung ist, kann die Energieführungskette mit einem in Längsrichtung der Kette nicht dehnbaren und in Abwinklungsrichtung der Kette biegsamem Stahlseil ausgestattet sein, wie diese Figur 10 zu entnehmen ist.

Die Darstellung in Fig. 10 zeigt eine Energieführungskette 27 zur Aufnahme und Führung von Leitungen 31 zwischen einer festen Basis 32 und einem beweglichen Mitnehmer 33 mit zwei parallelen Laschensträngen aus in Querrichtung gegenüberliegenden Laschen 1, die durch (in Fig. 10 nicht dargestellte) Querstege miteinander verbunden sind. Die unmittelbar benachbarten Laschen 1a und 1b jedes Laschenstrangs sind in der Abwinklungsrichtung der Kette gegeneinander verschwenkbar.

Wie weiterhin aus Figur 10 hervorgeht, sind in einem Bereich der Kette, der sich vom Mitnehmer 33 über das Obertrum, den Abwinklungsbereich bis in das Untertrum der Kette erstreckt, nicht dehnbare und in Abwinklungsrichtung der Kette biegsame Elemente 34 (im einzelnen 34a, 34b, 34c, 34d, 34e, 34f und 34g) angeordnet. Diese Elemente verbinden Kettenglieder 35a, 35b, 35c, 35d, 35e, 35f und 35g untereinander, die abschnittsweise im Abstand mehrerer Kettenglieder voneinander und vom Mitnehmer 33 in dem betreffenden Bereich der Kette angeordnet sind. Das zum Mitnehmer 33 nächstliegende Kettenglied 35a ist durch das nicht dehnbare Element 34a mit dem Mitnehmer 33 verbunden.

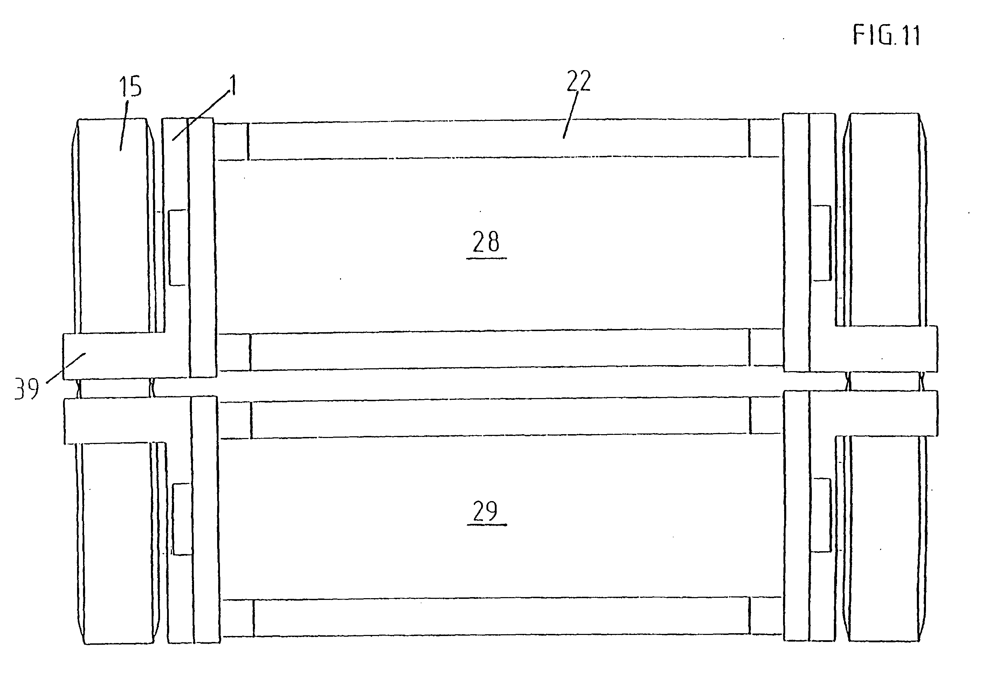

In Figur 11 ist ein zweites Ausführungsbeispiel der erfindungsgemäßen Energieführungskette dargestellt. Dort sind die Gleitrollen 15 auf die Außenseiten der Kettenlaschen 1, 2 aufgesetzt. Die Gleitrollen 15 sind nicht verdeckt. Als Laufflächen dienen seitlich sowohl an den Außenlaschen 1 als auch an den Innenlaschen 2 ausgebildete, im Querschnitt L-förmige Verbreiterungen 39, die an den mit Gleitrollen 15 versehenen Kettengliedern 38 fensterartige Ausnehmungen aufweisen, die jeweils von der Gleitrolle 15 durchsetzt werden. Die Anordnung der Gleitrollen 15 auf den Außenseiten der Kettenlaschen 1, 2 außerhalb des Kettenquerschnitts hat den Vorzug, daß die Teilung der Kettenglieder 38 mit Rollen kleiner gewählt werden kann, d. h. genauso klein wie die Teilung der Kettenglieder 37 ohne Rollen.

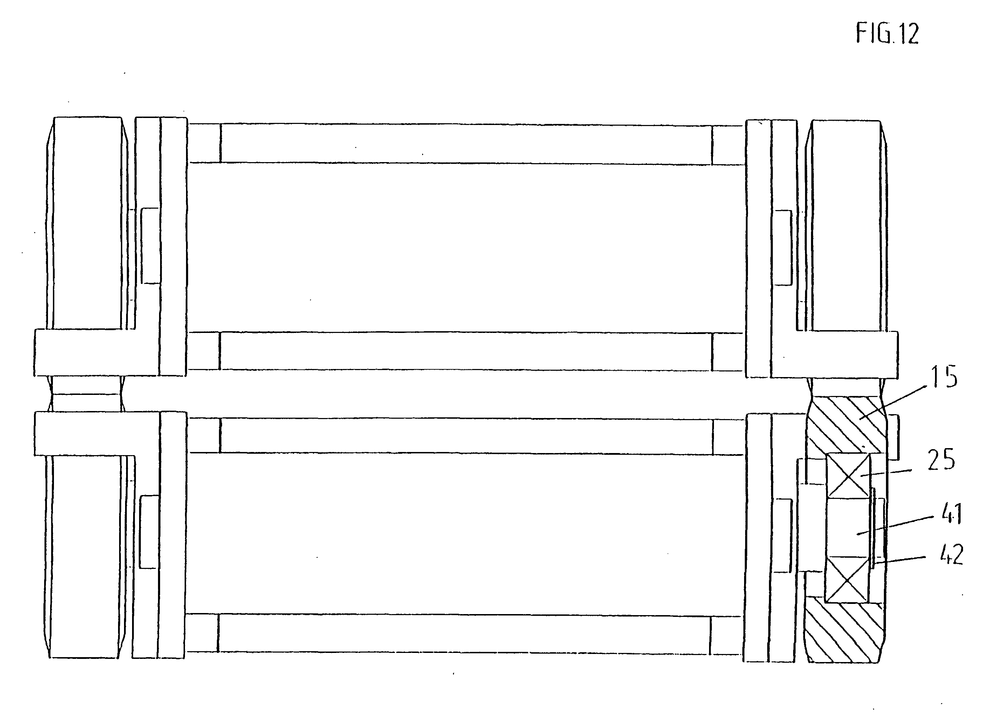

Wie dies insbesondere aus Figur 12 in der Schnittdarstellung ersichtlich ist, werden die Gleitrollen 15 dort von nur andeutungsweise dargestellten Kugellagern 25 aufgenommen, die jeweils auf einem an der Außenseite der betreffenden Kettenlasche 1 angeformten Lagerzapfen 41 mittels eines Seegerrings 42 gesichert sind.

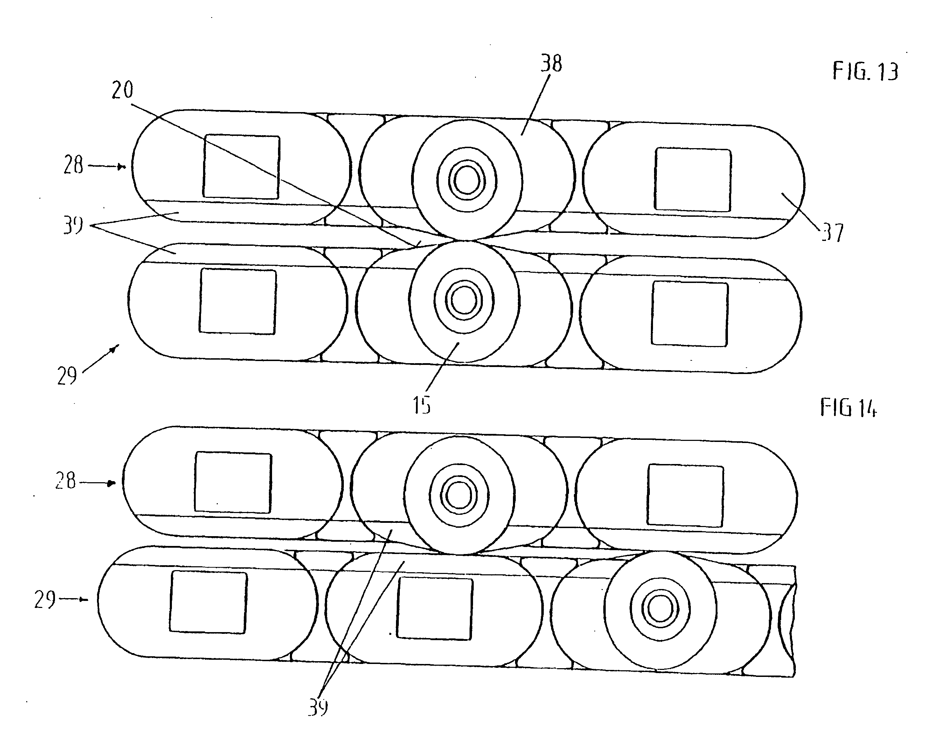

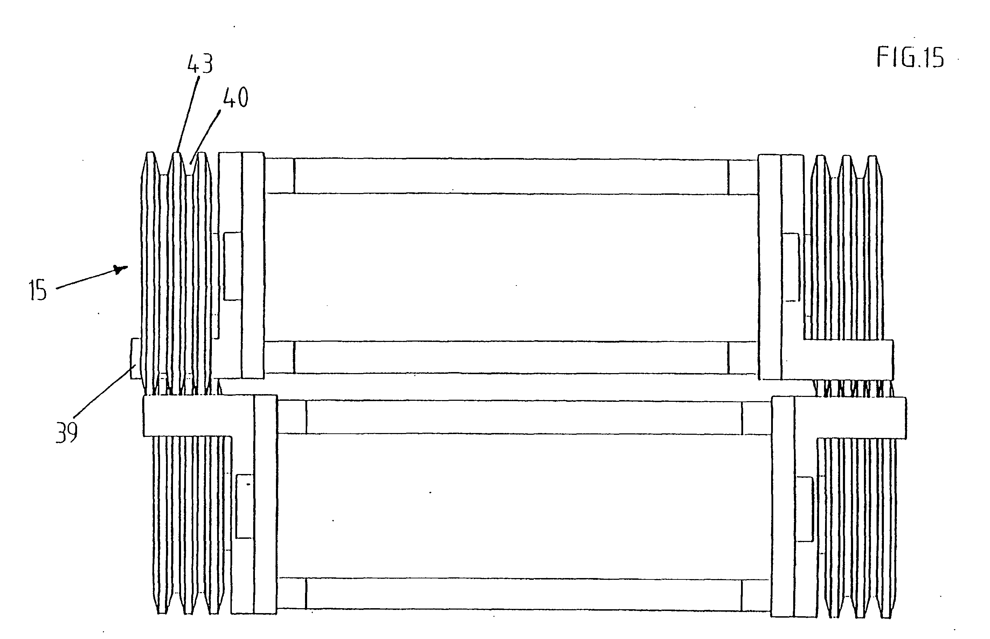

Die im Querschnitt L-förmigen Verbreiterungen 39, die sowohl an den Außenlaschen 1 als auch an den Innenlaschen 2 beider Laschenstränge vorgesehen sind, bilden in Längsrichtung jeweils eine geschlossene Lauffläche für die Gleitrollen 15, wobei bei dieser Ausführungsform ebenfalls zu den Gleitrollen 15 hin jeweils ansteigende Auflaufschrägen vorgesehen sein können, wie dies aus den Figuren 13 und 14 ersichtlich ist.

In den Figuren 13 und 14 sind zwei verschiedene Verfahrstellungen der Energieführungskette dargestellt, d. h. zwei unterschiedliche Stellungen jeweils der Kettenglieder 38 mit Rollen zueinander. In Figur 14 sind die Kettenglieder 38 mit Rollen seitlich versetzt zueinander dargestellt. Treffen die Gleitrollen 15 des Obertrums 28 und des Untertrums 29 aufeinander, wie dies in Figur 13 dargestellt ist, so muß sich das Obertrum 28 bezüglich des Untertrums 29 anheben, da die im Obertrum 28 dargestellte Gleitrolle 15 über die Auflaufschräge 20 und die Gleitrolle 15 im Untertrum 29 sozusagen hinwegklettern muß. Durch die Auflaufschrägen 20 wird der Überstand der Laufrollen 15 über die Laufflächen der Verbreiterungen 39 minimiert, so daß sich die Laufrollen 15 nicht ruckartig überspringen, was zu Laufunruhen der Energieführungskette führen würde.

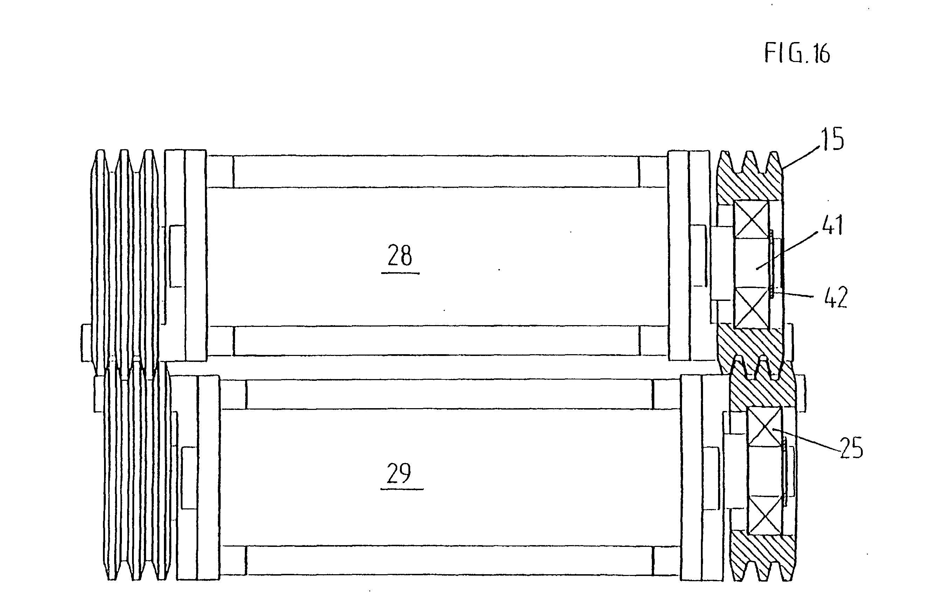

Die Figuren 15 bis 18 zeigen ein besonders vorteilhaftes Ausführungsbeispiel der erfindungsgemäßen Energieführungskette, bei welchem die Gleitrollen 15 mit einem Führungsprofil versehen sind, d. h. jeweils mehrere umlaufende, im Abstand voneinander angeordnete Führungsrillen 40 mit einem trapezförmigen Querschnittsprofil aufweisen. Die zwischen den Führungsrillen 40 verbleibenden Kämme 43 zweier aufeinandertreffender Gleitrollen treffen sich frontal, was auch aufgrund des trapezförmigen Querschnitts der Führungsrillen ein seitliches Versetzen von Obertrum 28 und Untertrum 29 zur Folge hat, wie dies in Figur 15 dargestellt ist. Der Versatz entspricht in etwa der Breite einer Führungsrille 40, so daß sich die Gleitrollen des Obertrums 28 und des Untertrums 29 durchdringen. Hierzu muß die Tiefe der Führungsrillen 40 selbstverständlich größer oder gleich den Abstand der Gleitrollen 15 von den durch die Verbreiterungen 39 gebildeten Laufflächen sein.

Die Elastizität der Energieführungskette erlaubt ohne weiteres einen solchen Versatz vom Obertrum 28 zum Untertrum 29 über eine größere Länge, so daß auf diese Art und weise minimalste Reibungswiderstände gewährleistet sind.

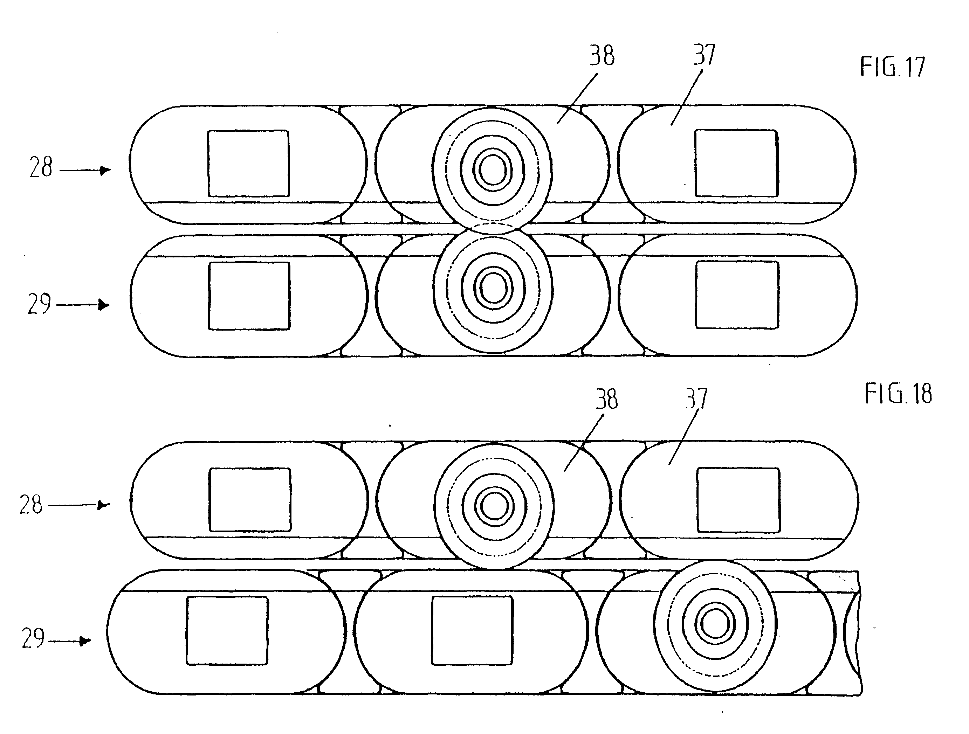

wie dies insbesondere aus Figur 17 ersichtlich ist, durchdringen sich die Gleitrollen der Kettenglieder des Obertrums 28 und der Kettenglieder des Untertrums 29, wenn diese aufeinandertreffen.

Sowohl die Kettenlaschen als auch die Gleitrollen bestehen vorzugsweise aus Kunststoff. Es sind jedoch auch andere Materialkombinationen möglich, so können die Kettenlaschen und/oder die Gleitrollen auch aus metallischen Werkstoffen bestehen.

### Bezugszeichenliste

- 1: Außenlasche
- 2: Innenlasche
- 3, 4: Endbereich
- 5: Gelenkzapfen
- 6, 7: Endbereich
- 8: Zapfenführung
- 9, 10: Anschlagpaare
- 11, 12: mittlerer Bereich
- 13, 14: Schrägen
- 15: Gleitrolle
- 15a: Ausnehmung
- 16: Flansch
- 17: Drehachse
- 18: Bereich
- 19: Schmalseite
- 20: Auflaufschräge
- 21: Zapfen
- 22: Quersteg
- 23: Schraubbolzen
- 24: Lagerschale
- 25: Kugellager
- 25a: Abdeckkappe
- 25b: Rastmittel
- 26: Laufflächenbereich
- 27: Energieführungskette
- 28: Obertrum
- 29: Untertrum
- 30: Umlenkbereich
- 31: Leitungen
- 32: Basis
- 33: Mitnehmer
- 34: nicht dehnbares Elemente
- 35: Kettenglied
- 36: Verbreiterung
- 37: Kettenglied ohne Rollen
- 38: Kettenglied mit Rollen
- 39: Verbreiterungen der Kettenlaschen
- 40: Führungsrillen
- 41: Lagerzapfen
- 42: Seegerring
- 43: Kämme

## Patentansprüche

1. Energieführungskette zur Führung von Schläuchen, Kabeln oder dergleichen mit einer Anzahl gelenkig miteinander verbundener Kettenglieder (35), die durch zueinander parallele Laschen (1, 2) und diese verbindenden Querstege (22) gebildet werden, wobei die Energieführungskette so verfahrbar ist, dass diese ein Obertrum (28), ein Untertrum (29) und einen diese verbindenden Umlenkbereich (30) bildet, wobei das Obertrum (28) auf dem Untertrum (29) aufliegt und wobei zumindest an einigen Kettengliedern des Obertrums (28) und/oder des Untertrums (29) Gleitrollen (15) vorgesehen sind, die derart angeordnet sind, dass sie auf an den Kettengliedern der gegenüberliegenden Trums vorgesehenen Laufflächen (19) bei einer Bewegung der Energieführungskette (27) abrollbar sind, **dadurch gekennzeichnet**, die Gleitrollen (15) ein Führungsprofil aufweisen, das durch mehrere umlaufende, im Abstand voneinander in der Lauffläche der Gleitrollen (15) angeordnete Führungsrillen (40) gebildet wird.

2. Energieführungskette nach Anspruch 1, **dadurch gekennzeichnet, dass** die Tiefe der Führungsrillen (40) wenigstens dem Überstand der Gleitrolle (15) über die Lauffläche der betreffenden Kettenlasche (1) entspricht.

3. Energieführungskette nach einem der Ansprüche 1 bis 2, **dadurch gekennzeichnet, dass** die Laufflächen (19) durch die dem gegenüberliegenden Trum (28, 29) zugewandten Schmalseiten (19) der Kettenlaschen (1) gebildet werden.

4. Energieführungskette nach einem der Ansprüche 1 bis 3, **dadurch gekennzeichnet, dass** die Gleitrollen (15) in an den Kettenlaschen (1) vorgesehenen Ausnehmungen (15a) angeordnet sind und zumindest geringfügig über die Kettenlaschen (1) hervorstehen

5. Energieführungskette nach einem der Ansprüche 1 bis 4, **dadurch gekennzeichnet, dass** an jeweils einer Kettenlasche (1) zumindest je zwei Gleitrollen (15) vorgesehen sind, die in Längsrichtung der Energieführungskette (27) voneinander beabstandet sind.

6. Energieführungskette nach einem der Ansprüche 1 bis 5, **dadurch gekennzeichnet, dass** zumindest je eine Gleitrolle (15) an einer Kettenlasche (1) vorgesehen ist, die im mittleren Bereich (11,12) der Kettenlasche (1) angeordnet ist.

7. Energieführungskette nach einem der Ansprüche 1 bis 6, **dadurch gekennzeichnet, dass** die Laufflächen (19) Auflaufschrägen (20) aufweisen, die zu den Gleitrollen (15) hin jeweils ansteigen.

8. Energieführungskette nach einem der Ansprüche 1 bis 7, **dadurch gekennzeichnet, dass** die Gleitrollen (15) mittels Flanschen (16) in Ausnehmungen der Kettenlaschen (1) befestigt sind, die einen Lagerbereich (17) für die Gleitrollen (15) aufweisen.

9. Energieführungskette nach einem der Ansprüche 1 bis 8, **dadurch gekennzeichnet, dass** Mittel (25a) vorgesehen sind, mittels derer die Ausnehmungen (15a) zur Aufnahme der Gleitrollen (15) überbrückbar sind.

10. Energieführungskette nach einem der Ansprüche 1 bis 9, **dadurch gekennzeichnet, dass** Kettenlaschen (19) vorgesehen sind, deren eine Schmalseite (19) mit einer Ausnehmung (15a) zur Aufnahme einer Gleitrolle (15) ausgestattet ist und **dass** die gegenüberliegende Schmalseite (19) durchgehend ausgebildet ist, und dass die Kettenlasche (1) so ausgebildet ist, dass sie wahlweise mit einer der beiden Schmalseiten (19), dem anderen Trum (28,29) gegenüberliegend montierbar ist.

11. Energieführungskette nach einem der Ansprüche 1 bis 10, **dadurch gekennzeichnet, dass** einer Schmalseite (19) eines Kettengliedes zugeordnet zwei voneinander in Längsrichtung der Kette beabstandete Querstege (22) vorgesehen sind.

12. Energieführungskette nach Anspruch 11, **dadurch gekennzeichnet, dass** an einer Schmalseite einer Lasche (1,2) eines Kettenglieds zwei Querstege (22) jeweils unmittelbar benachbart den beiden Gelenkbereichen (6, 7) der Kettenlasche (1, 2) vorgesehen sind.

13. Energieführungskette nach Anspruch 12, **dadurch gekennzeichnet, dass** an den Querstegen (22) seitliche Verbreiterungen (36) vorgesehen sind, die die Innenseite der benachbarten Lasche teilweise überdecken.

14. Energieführungskette nach einem der Ansprüche 1 bis 13, **dadurch gekennzeichnet, dass** die Gleitrollen (15) seitlich nach außen vorstehend an den Kettenlaschen (1) angeordnet sind und **dass** als Laufflächen seitlich nach außen vorkragende Verbreiterungen (39) der Kettenlaschen (1, 2) vorgesehen sind.

15. Energieführungskette nach Anspruch 14, **dadurch gekennzeichnet, dass** wenigstens alle Kettenlaschen (1, 2) eines Strangs mit einer eine Lauffläche bildenden Verbreiterung (39) versehen sind, so dass über die Länge der Energieführungskette wenigstens eine im wesentlichen geschlossene Lauffläche entsteht.

16. Energieführungskette nach einem der Ansprüche 1 bis 15, **dadurch gekennzeichnet, dass** die mit Gleitrollen (15) versehenen Kettenglieder im Abstand von mehr als einem Kettenglied angeordnet sind.

17. Energieführungskette nach einem der Ansprüche 1 bis 16, **dadurch gekennzeichnet, dass** die mit Gleitrollen (15) versehenen Kettenglieder ungleichmäßig über die Länge der Energieführungskette (27) verteilt sind.

18. Energieführungskette nach einem der Ansprüche 1 bis 17, **dadurch gekennzeichnet, dass** die Führungsrillen (40) ein trapezförmiges Querschnittsprofil aufweisen.

19. Energieführungskette nach einem der Ansprüche 1 bis 18, **dadurch gekennzeichnet, dass** mehr als zwei parallele Stränge von Kettenlaschen (1) vorgesehen sind, wobei an zumindest zwei Strängen derselben Gleitrollen (15) angeordnet sind.

20. Energieführungskette nach einem der Ansprüche 1 bis 19, **dadurch gekennzeichnet, dass** zur Aufnahme und Führung von Leitungen (31) zwischen einer festen Basis (32) und einem beweglichen Mitnehmer (33) mit zwei parallelen Laschensträngen aus in Querrichtung gegenüberliegenden Laschen (1), die durch Querstege (22) miteinander verbunden sind, wobei die unmittelbar benachbarten Laschen jedes Laschenstranges in der Abwinklungsrichtung der Kette gegeneinander verschwenkbar sind, wobei zumindest in einem an den Mitnehmer (33) anschließenden Bereich der Kette abschnittsweise Kettenglieder (35a, 35b, 35c, 35d, 35e, 35f, 35g) untereinander und das zum Mitnehmer (33) nächstliegende (35e) dieser Kettenglieder mit dem Mitnehmer (33) zustabil durch mindestens ein in Längsrichtung der Kette im wesentlichen nicht dehnbares und in Abwinklungsrichtung der Kette biegsames Element (34) verbunden sind.

## Claims

1. Energy guiding chain for guiding cables, hoses and the like, having a number of chain links (35) connected to one another in articulated fashion which are formed by parallel straps (1, 2) connected by cross-members (22), where the energy guiding chain can be moved in such a way that it forms an upper strand (28), a lower strand (29) and a deflection zone (30) connecting the two, where the upper strand (28) rests on the lower strand (29), at least some of the chain links of the upper strand (28) and/or the lower strand (29) are provided with rollers (15) which are arranged in such a way that, when the energy guiding chain (27) travels, they can roll on running surfaces (19) provided on the chain links of the opposite strand, **characterised in that** the rollers (15) have a guide profile, which is formed by several all-round guide grooves (40) positioned at a distance from one another in the running surface of the rollers (15).

2. Energy guiding chain according to Claim 1, **characterised in that** the depth of the guide grooves (40) is at least equal to the distance the roller (15) projects beyond the running surface of the associated chain strap (1).

3. Energy guiding chain according to one of Claims 1 to 2, **characterised in that** the running surfaces (19) are formed by the narrow sides (19) of the chain straps (1) facing the opposite strand (28, 29).

4. Energy guiding chain according to one of Claims 1 to 3, **characterised in that** the rollers (15) are located in recesses (15a) provided on the chain straps (1) and project at least slightly beyond the chain straps (1).

5. Energy guiding chain according to one of Claims 1 to 4, **characterised in that** at least two rollers (15) are provided on each chain strap (1) which are spaced apart from one another in the longitudinal direction of the energy guiding chain (27).

6. Energy guiding chain according to one of Claims 1 to 5, **characterised in that** at least one roller (15) is mounted on each chain strap (1) in the middle section (11, 12) of the chain strap (1).

7. Energy guiding chain according to one of Claims 1 to 6, **characterised in that** the running surfaces (19) have run-up bevels (20) rising towards the rollers (15).

8. Energy guiding chain according to one of Claims 1 to 7, **characterised in that** the rollers (15) are mounted in recesses in the chain straps (1) by means of flanges (16) having a bearing section (17) for the rollers (15).

9. Energy guiding chain according to one of Claims 1 to 8, **characterised in that** means (25a) are provided with which the recesses (15a) for accommodating the rollers (15) can be bridged.

10. Energy guiding chain according to one of Claims 1 to 9, **characterised in that** chain straps (19) are provided which have a recess (15a) for accommodating a roller (15) on one of the narrow sides (19), **in that** the opposite narrow side (19) is of continuous design, and **in that** the chain strap (1) is designed in such a way that it can optionally be mounted with one of the two narrow sides (19) facing the opposite strand (28, 29).

11. Energy guiding chain according to one of Claims 1 to 10, **characterised in that** two cross-members (22) at a distance from one another in the longitudinal direction of the chain are provided on one narrow side (19) of a chain link.

12. Energy guiding chain according to Claim 11, **characterised in that** two cross-members (22) are provided on one narrow side of a strip (1, 2) of a chain link each directly adjacent of the joint sections (6, 7) of the chain strips (1, 2).

13. Energy guiding chain according to Claim 12, **characterised in that** the cross-members (22) are provided with lateral wider sections (36) which are partially covering the inner side of the adjacent strip.

14. Energy guiding chain according to one of Claims 1 to 13, **characterised in that** the rollers (15) are mounted on the side of the chain straps (1) projecting outwards and **in that** wider sections (39) of the chain straps (1, 2) projecting out to the side are provided as running surfaces.

15. Energy guiding chain according to Claim 14, **characterised in that** at least all the chain straps (1, 2) of one strand are provided with a wider section (39) which forms a running surface, so that at least one essentially closed running surface is formed along the length of the energy guiding chain.

16. Energy guiding chain according to one of Claims 1 to 15, **characterised in that** the chain links with rollers (15) are mounted at intervals of more than one chain link.

17. Energy guiding chain according to one of Claims 1 to 16, **characterised in that** the chain links with rollers (15) are distributed over the length of the energy guiding chain (27) at irregular intervals.

18. Energy guiding chain according to one of Claims 1 to.17, **characterised in that** the guide grooves (40) have a trapezoidal cross-sectional profile.

19. Energy guiding chain according to one of Claims 1 to 18, **characterised in that** more than two parallel strands of chain straps (1) are provided, where rollers (15) are provided on at least two strands.

20. Energy guiding chain according to one of Claims 1 to 19, **characterised in that** for accommodating and guiding lines (31) between a stationary base (32) and a mobile driver (33) two parallel strap strands consisting of opposing straps (1) in the transverse direction are provided which are connected to one an-other by cross-members (22), the immediately adjacent straps of each strap strand can swivel relative to one another in the bending direction of the chain, where in at least one area of the chain adjacent to the driver (33), sections of chain links (35a, 35b, 35c, 35d, 35e, 35f, 35g) are interconnected and the chain link (35e) closest to the driver (33) is connected to the driver (33) in tension-resistant fashion by at least one element (34) which is essentially inextensible in the longitudinal direction of the chain and flexible in the bending direction of the chain.

## Revendications

1. Chaîne d'amenée d'énergie pour le guidage de tuyaux, de câbles ou similaires, comprenant un certain nombre de maillons de chaîne (35) reliés les uns aux autres de façon articulée, qui sont formés par des ailes (1, 2) mutuellement parallèles par des barrettes transversales (22) qui les relient, ladite chaîne d'amenée d'énergie étant capable de circuler de telle manière qu'elle forme un brin supérieur '(28), un brin inférieur (29) et une zone de renvoi (30) qui relie ceux-ci, le brin supérieur (28) reposant sur le brin inférieur (29), et au moins sur quelques-uns des maillons de chaîne du brin supérieur (28) et/ou du brin inférieur (29) sont prévus des galets de coulissement (15) agencés de telle manière qu'ils sont capables de rouler sur des surfaces de roulement (19) prévues sur les maillons de chaîne du brin opposé lors d'un déplacement de la chaîne d'amenée d'énergie (27), **caractérisée en ce que** les galets de coulissement (15) présentent un profil de guidage qui est formé par plusieurs rainures de guidage (40) périphériques, agencées à distance les unes des autres dans la surface de roulement des galets de coulissement (15).

2. Chaîne d'amenée d'énergie selon la revendication 1, **caractérisée en ce que** la profondeur des rainures de guidage (40) correspond au moins au dépassement des galets de coulissement (15) au-delà de la surface de roulement de l'aile de maillon (1) correspondante.

3. Chaîne d'amenée d'énergie selon l'une ou l'autre des revendications 1 et 2, **caractérisée en ce que** les surfaces de roulement (19) sont formées par les petits côtés (19), tournés vers le brin opposé (28, 29), des ailes de maillons (1).

4. Chaîne d'amenée d'énergie selon l'une des revendications 1 à 3, **caractérisée en ce que** les galets de coulissement (15) sont agencés dans des évidements (15a) prévus dans des les ailes de maillons (1) et dépassent au moins légèrement au-delà des ailes de maillons (1).

5. Chaîne d'amenée d'énergie selon l'une des revendications 1 à 4, **caractérisée en ce qu'**au moins deux galets de coulissement respectifs (15) sont prévus sur chaque aile de maillon (1), lesdits galets étant à distance l'un de l'autre dans la direction longitudinale de la chaîne d'amenée d'énergie.

6. Chaîne d'amenée d'énergie selon l'une des revendications 1 à 5, **caractérisée en ce qu'**au moins un galet de coulissement respectif (15) est prévu sur une aile de maillon (1), lequel est agencé dans la zone médiane (11, 12) de l'aile de maillon (1).

7. Chaîne d'amenée d'énergie selon l'une des revendications 1 à 6, **caractérisée en ce que** les surfaces de roulement (19) comportent des pentes d'engagement (20) qui montent respectivement vers les galets de coulissement (15).

8. Chaîne d'amenée d'énergie selon l'une des revendications 1 à 7, **caractérisée en ce que** les galets de coulissement (15) sont fixés au moyen de brides (16) dans des évidements des ailes de maillons (1), ces évidements présentant une zone formant palier (17) pour les galets de coulissement (15).

9. Chaîne d'amenée d'énergie selon l'une des revendications 1 à 8, **caractérisée en ce qu'**il est prévu des moyens (25a) à l'aide desquels les évidements (15a) destinés à recevoir les galets de coulissement (15) peuvent être comblés.

10. Chaîne d'amenée d'énergie selon l'une des revendications 1 à 9, **caractérisée en ce qu'**il est prévu des ailes de maillons (19) dont un petit côté (19) est pourvu d'un évidement (15a) pour recevoir un galet de coulissement (15), et le petit côté opposé (19) est réalisé continu, et **en ce que** l'aile de maillon (1) est ainsi réalisée qu'elle peut être montée au choix avec l'un des deux petits côtés (19) à l'opposé de l'autre brin (28, 29).

11. Chaîne d'amenée d'énergie selon l'une des revendications 1 à 10, **caractérisée en ce qu'**il est prévu deux barrettes transversales (22) à distance l'une de l'autre en direction longitudinale de la chaîne, lesdites barrettes étant associées à un petit côté (19) d'un maillon de la chaîne.

12. Chaîne d'amenée d'énergie selon la revendication 11, **caractérisée en ce qu'**il est prévu sur un petit côté d'une aile (1, 2) d'un maillon de la chaîne deux barrettes transversales (22) qui sont respectivement immédiatement voisines des deux zones d'articulation (6, 7) de l'aile (1, 2) de maillon.

13. Chaîne d'amenée d'énergie selon la revendication 12, **caractérisée en ce qu'**il est prévu des élargissements latéraux (36) sur les barrettes transversales (22), lesdits élargissements coiffant partiellement le côté intérieur de l'aile voisine.

14. Chaîne d'amenée d'énergie selon l'une des revendications 1 à 13, **caractérisée en ce que** les galets de coulissement (15) sont agencés latéralement et en dépassement vers l'extérieur sur les ailes de maillons (1), et **en ce qu'**il est prévu à titre de surfaces de roulement des élargissements latéraux (39) des ailes de maillons (1, 2) en porte-à-faux vers l'extérieur.

15. Chaîne d'amenée d'énergie selon la revendication 14, **caractérisée en ce qu'**au moins toutes les ailes de maillons (1, 2) d'une ligne sont pourvues d'un élargissement (39) formant la surface de roulement, de sorte qu'il en résulte sur la longueur de la chaîne d'amenée d'énergie une surface de roulement au moins sensiblement fermée.

16. Chaîne d'amenée d'énergie selon l'une des revendications 1 à 15, **caractérisée en ce que** les maillons de chaîne pourvus des galets de coulissement (15) sont agencés à une distance supérieure à un maillon de chaîne.

17. Chaîne d'amenée d'énergie selon l'une des revendications 1 à 16, **caractérisée en ce que** les maillons de chaîne pourvus des galets de coulissement (15) sont répartis irrégulièrement sur la longueur de la chaîne d'amenée d'énergie (27).

18. Chaîne d'amenée d'énergie selon l'une des revendications 1 à 17, **caractérisée en ce que** les rainures de guidage (40) présentent un profil de section transversale trapézoïdal.

19. Chaîne d'amenée d'énergie selon l'une des revendications 1 à 18, **caractérisée en ce qu'**il est prévu plus de deux lignes parallèles d'ailes de maillons (1), et **en ce que** les mêmes galets de coulissement (15) sont agencés sur au moins deux lignes.

20. Chaîne d'amenée d'énergie selon l'une des revendications 1 à 19, **caractérisée en ce que**, pour la réception et le guidage de lignes et de conduites (31) entre une base fixe (32) et un élément d'entraînement mobile (33), elle comprend deux lignes d'ailes parallèles formées d'ailes (1) opposées en direction transversale qui sont reliées les unes aux autres par des barrettes transversales (22), les ailes immédiatement voisines de chaque ligne d'ailes étant capables de pivoter l'une contre l'autre dans la direction de déflexion de la chaîne, et **en ce qu'**au moins dans une zone de la chaîne qui se raccorde à l'élément d'entraînement (33) les maillons de chaîne (35a, 35b, 35c, 35d, 35e, 35f, 35g) sont reliés par tronçons les uns aux autres, et le maillon de chaîne le plus proche (35e) de l'élément d'entraînement (33) est relié à l'élément d'entraînement (33) de façon rigide par au moins un élément (34) sensiblement incapable de s'allonger dans la direction longitudinale de la chaîne et flexible dans la direction de déflexion de la chaîne.
